(19) **Europäisches Patentamt European Patent Office Office européen des brevets**

(11) **EP 4 350 612 B1**

(12) **EUROPEAN PATENT SPECIFICATION**

(45) Date of publication and mention
of the grant of the patent:
**29.07.2026  Bulletin 2026/31**

(21) Application number: **22811341.1**

(22) Date of filing: **25.05.2022**

(51) International Patent Classification (IPC):
*G06V 10/774* (2022.01)    *G06T 7/00* (2017.01)

(52) Cooperative Patent Classification (CPC):
**G06V 10/774; G06T 7/00;** G06T 2207/20076;
G06T 2207/20081; G06T 2207/20084;
G06T 2207/20212

(86) International application number:
**PCT/JP2022/021329**

(87) International publication number:
**WO 2022/250071 (01.12.2022 Gazette 2022/48)**

(54) **TRAINING METHOD, TRAINING DEVICE, AND PROGRAM**

TRAININGSMETHODE, TRAININGSGERÄT UND PROGRAMM

MÉTHODE D'ENTRAÎNEMENT, DISPOSITIF D'ENTRAÎNEMENT ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **27.05.2021   US 202163193785 P**

(43) Date of publication of application:
**10.04.2024   Bulletin 2024/15**

(73) Proprietor: **Panasonic Intellectual Property
Corporation
of America
Torrance, CA 90504 (US)**

(72) Inventors:
• **FUJIYOSHI, Hironobu
Kasugai, Aichi 487-8501 (JP)**
• **YAMASHITA, Takayoshi
Kasugai, Aichi 487-8501 (JP)**

• **HIRAKAWA, Tsubasa
Kasugai, Aichi 487-8501 (JP)**
• **KOZUKA, Kazuki
Kadoma-shi, Osaka 571-8501 (JP)**

(74) Representative: **Novagraaf International SA
Chemin de l'Echo 3
1213 Onex, Geneva (CH)**

(56) References cited:
WO-A1-2021/176605    JP-A- 2020 038 668
JP-A- 2020 173 150    JP-A- 2021 013 685
JP-A- 2022 037 804    US-A1- 2016 026 900
US-A1- 2021 015 440

• **GOLNAZ GHIASI ET AL: "Simple Copy-Paste is a
Strong Data Augmentation Method for Instance
Segmentation", ARXIV.ORG, CORNELL
UNIVERSITY LIBRARY, 201 OLIN LIBRARY
CORNELL UNIVERSITY ITHACA, NY 14853, 13
December 2020 (2020-12-13), XP081837327**

**Description**

[Technical Field]

The present invention relates to, for instance, a training method for generating a learning model for use in image recognition.

[Background Art]

PTL 1 discloses adding arbitrary noise to an image to enable generating a more general and robust classifier.

[Citation List]

[Patent Literature]

[PTL 1] Japanese Unexamined Patent Application Publication No. 2019-79374
Further art is disclosed by the document US 2016/026900.

[Summary of Invention]

[Technical Problem]

Adding noise to an original image may, however, result in an image completely different from the original image. By machine learning the image completely different from the original image using the training label of the original image, image recognition accuracy may be degraded. Thus, performing image recognition that is robust against noise is not necessarily easy.
In view of this, the present disclosure provides, for instance, a training method that enables generating a learning model that is robust against noise.

[Solution to Problem]

A training method according to one aspect of the present disclosure is a training method for generating a learning model for use in image recognition, and includes: generating a first image by adding noise to a first area in an original image; generating a second image by adding noise to a second area that is an area excluding the first area in the original image; generating a combined image by weighted addition of the first image and the second image at a first ratio; generating a first training label for the first image by weighted addition of a first base label corresponding to the correct label of the original image and a second base label corresponding to the incorrect label of the original image at a second ratio that is the ratio between the size of the first area and the size of the second area; generating a second training label for the second image by weighted addition of the first base label and the second base label at the inverse ratio of the second ratio; generating a combined training label for the combined image by weighted addition of the first training label and the second training label at the first ratio; and generating the learning model by machine learning using the combined image and the combined training label.
Note that these general or specific aspects may be achieved by a system, a device, a method, an integrated circuit, a computer program, a computer-readable non-transitory recording medium such as a CD-ROM, or any combination thereof.

[Advantageous Effects of Invention]

The training method and the like according to one aspect of the present disclosure enable generating a learning model that is robust against noise.

[Brief Description of Drawings]

[FIG. 1]

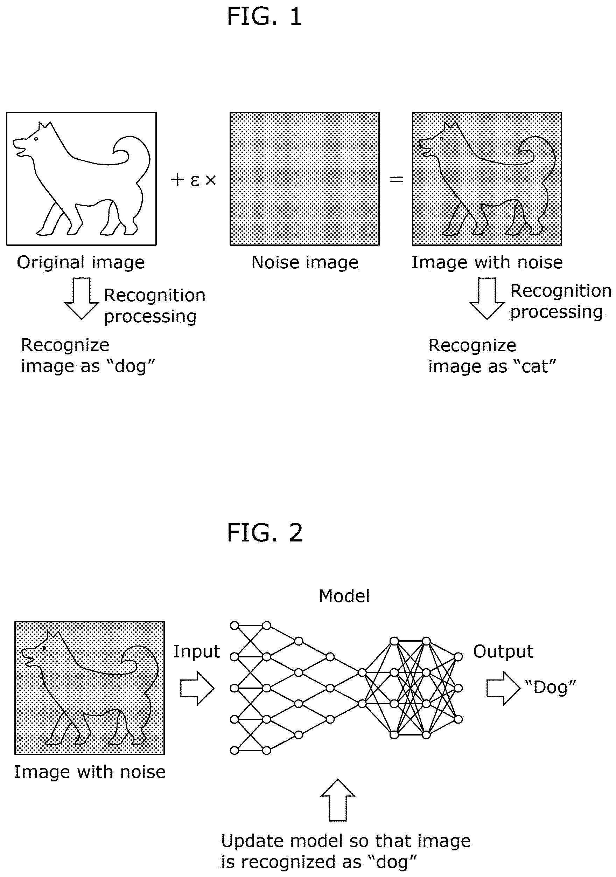

FIG. 1 is a conceptual diagram illustrating recognition processing results in a reference example.
[FIG. 2]

FIG. 2 is a conceptual diagram illustrating training in the reference example.
[FIG. 3]

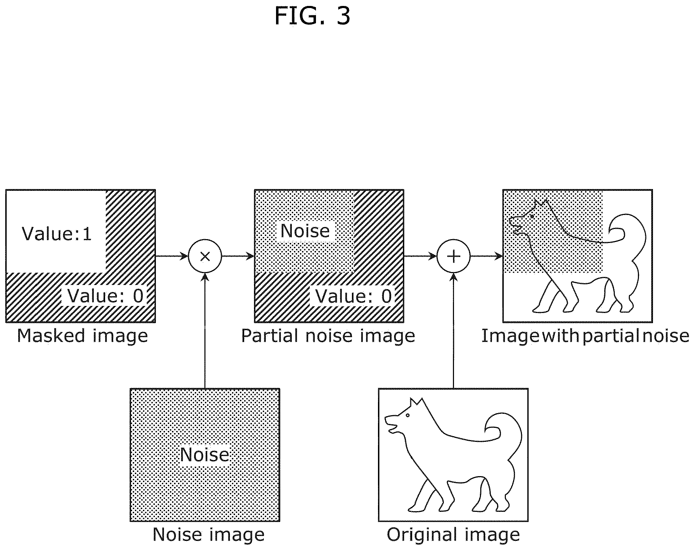

FIG. 3 is a conceptual diagram illustrating an image with partial noise in the reference example.
[FIG. 4]

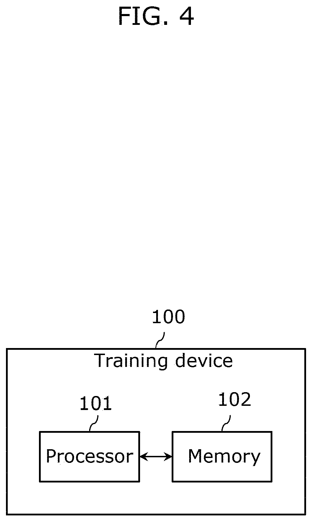

FIG. 4 is a block diagram illustrating the configuration of a training device according to an embodiment.
[FIG. 5]

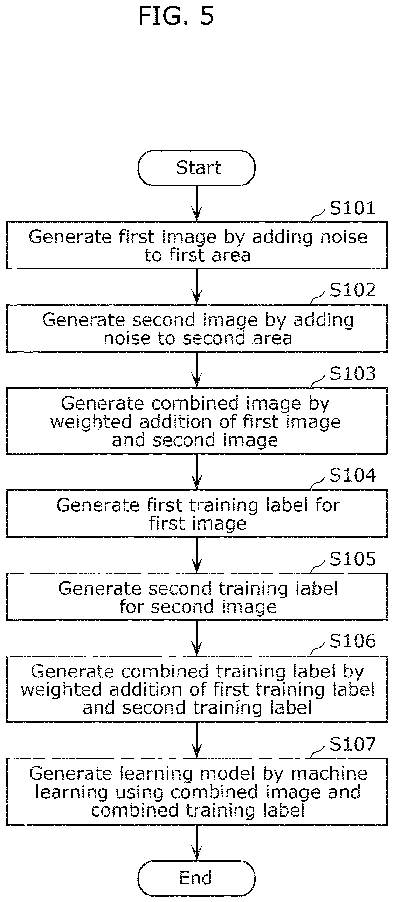

FIG. 5 is a flowchart illustrating an operation performed by the training device according to the embodiment.
[FIG. 6]

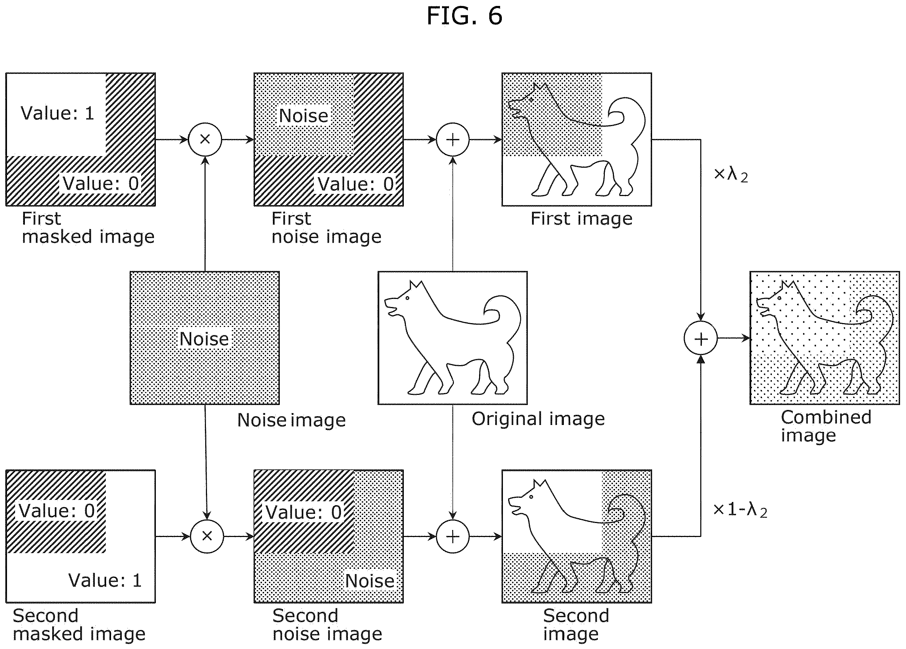

FIG. 6 is a conceptual diagram illustrating the details of the generation of a combined image according to the embodiment.
[FIG. 7]

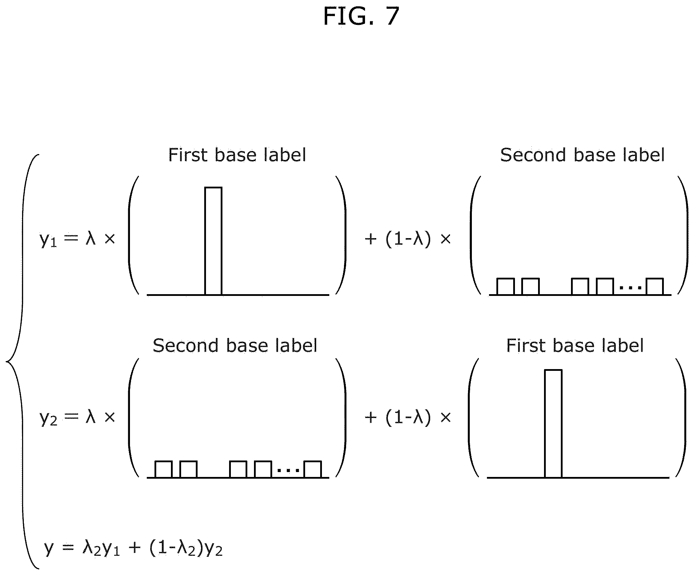

FIG. 7 is a conceptual diagram illustrating the details of the generation of a combined training label according to the embodiment.
[FIG. 8]

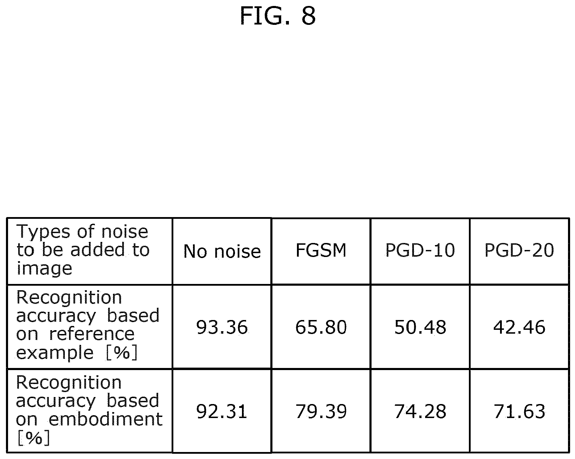

FIG. 8 is a data diagram illustrating the result of comparison with recognition accuracy according to the embodiment.

[Description of Embodiments]

A learning model that is robust against noise may be generated by, for example, adding noise to an image and machine learning using the image to which the noise is added or adding noise to a part of an image and machine learning using the image the part of which the noise is added to.

Unfortunately, adding noise to an original image may result in an image completely different from the original image. When noise is added to a part of an original image, the training label of the original image may not be appropriate due to the presence of the area with noise and the area without noise in the original image. If machine learning is performed on such an image using the training label of the original image, image recognition accuracy may be degraded. Thus, performing image recognition that is robust against noise is not necessarily easy.

In view of this, a training method according to one aspect of the present disclosure is, for example, a training method for generating a learning model for use in image recognition, and includes: generating a first image by adding noise to a first area in an original image; generating a second image by adding noise to a second area that is an area excluding the first area in the original image; generating a combined image by weighted addition of the first image and the second image at a first ratio; generating a first training label for the first image by weighted addition of a first base label corresponding to the correct label of the original image and a second base label corresponding to the incorrect label of the original image at a second ratio that is the ratio between the size of the first area and the size of the second area; generating a second training label for the second image by weighted addition of the first base label and the second base label at the inverse ratio of the second ratio; generating a combined training label for the combined image by weighted addition of the first training label and the second training label at the first ratio; and generating the learning model by machine learning using the combined image and the combined training label.

This makes it possible to generate a combined image in which noise is added to each area according to a first ratio. This may therefore generate an image appropriate for training. In accordance with the first ratio, two images are combined and two training labels are combined. It is therefore possible to generate a combined training label appropriate for the combined image. Using combined images and combined training labels enables generating a learning model that is robust against noise.

For example, in the training method, a plurality of combined images and a plurality of combined training labels are generated by generating, for each of a plurality of first areas, the first image, the second image, the combined image, the first training label, the second training label, and the combined training label, where each of the plurality of combined images is the combined image, each of the plurality of combined training labels is the combined training label, and each of the plurality of first areas is the first area. The learning model is generated by machine learning using the plurality of combined images and the plurality of combined training labels.

This makes it possible to generate various combined images and various combined training labels in accordance with various first areas, which in turn makes it possible to generate a learning model that is robust against noise.

For example, a plurality of combined images and a plurality of combined training labels are generated by generating the combined image and the combined training label at each of a plurality of first ratios, where each of the plurality of combined images is the combined image, each of the plurality of combined training labels is the combined training label, and each of the plurality of first ratios is the first ratio. The learning model is generated by machine learning using the plurality of combined images and the plurality of combined training labels.

This makes it possible to generate various combined images and various combined training labels in accordance with various first ratios, which in turn makes it possible to generate a learning model that is robust against noise.

For example, the first area is determined in accordance with the following mathematical expressions:

[Math. 1]

$$r_{x1} \sim U[0, W]$$
$$r_{y1} \sim U[0, H]$$

$$r_{x2} = \min\left(W, W\sqrt{1 - \lambda_1} + r_{x1}\right)$$

$$r_{y2} = \min\left(H, H\sqrt{1 - \lambda_1} + r_{y1}\right)$$

$$\lambda_1 \sim U[0,1]$$

where W denotes the width of the original image, H denotes the height of the original image, $r_{x1}$ denotes the left edge of the first area, $r_{y1}$ denotes the upper edge of the first area, $r_{x2}$ denotes the right edge of the first area, $r_{y2}$ denotes the lower edge of the first area, and $a \sim U[b, c]$ denotes that a is determined in accordance with an even distribution from b to c.

This makes it possible to generate a combined image and a combined training label using a first area appropriately determined in accordance with the size of an original image. This in turn makes it possible to generate a learning model that is robust against noise.

For example, the first ratio is determined in accordance with a beta distribution of $\beta(\alpha, \alpha)$, where $\beta$ denotes a beta function, and $\alpha$ denotes a positive real number.

This makes it possible to generate a combined image and a combined training label using a first ratio appropriately determined in accordance with a probability distribution having symmetry. This in turn makes it possible to generate a learning model that is robust against noise.

A training device according to one aspect of the present disclosure is, for example, a training device that generates a learning model for use in image recognition, and includes: a processor; and memory. Using the memory, the processor: generates a first image by adding noise to a first area in an original image; generates a second image by adding noise to a second area that is an area excluding the first area in the original image; generates a combined image by weighted addition of the first image and the second image at a first ratio; generates a first training label for the first image by weighted addition of a first base label corresponding to the correct label of the original image and a second base label corresponding to the incorrect label of the original image at a second ratio that is the ratio between the size of the first area and the size of the second area; generates a second training label for the second image by weighted addition of the first base label and the second base label at the inverse ratio of the second ratio; generates a combined training label for the combined image by weighted addition of the first training label and the second training label at the first ratio; and generates the learning model by machine learning using the combined image and the combined training label.

Thus, the training device can execute the above-described training method, and the training method is implemented by the training device.

For example, a program according to one aspect of the present disclosure may be a program for causing a computer to execute the above-described training method.

Thus, the program can cause a computer to execute the above-described training method, and the training method is implemented by the program.

Note that these general or specific aspects may be achieved by a system, a device, a method, an integrated circuit, a computer program, a computer-readable non-transitory recording medium such as a CD-ROM, or any combination thereof.

Hereinafter, embodiments of the present disclosure will be described with reference to the drawings. The embodiments described below each present a general or specific example of the present disclosure. The numerical values, shapes, materials, elements, the arrangement and connection of the elements, steps, an order of the steps, etc. described in the following embodiments are mere examples, and therefore are not intended to limit the present disclosure.

FIG. 1 is a conceptual diagram illustrating recognition processing results in a reference example. An image with noise is generated by, for example, adding noise to an original image. Specifically, an image with noise is generated by adding an original image to an image obtained by multiplying the weight of $\varepsilon$ to a noise image. When image recognition is performed on this image with noise, a correct recognition result may not be obtained. As used herein, adding an image to another image means adding the pixel values of the pixels corresponding to one of two images to the pixel values of the pixels corresponding to the other of the two images.

In the example in FIG. 1, when recognition processing is performed on an original image, it is correctly recognized that the original image presents "dog". When recognition processing is performed on an image with noise, it is falsely recognized that the image with noise presents "cat". In other words, false recognition may occur due to noise added to an original image.

FIG. 2 is a conceptual diagram illustrating training in the reference example. In the example in FIG. 2, training is conducted for a model for use in image recognition, using an image with noise. Specifically, the model is updated so that it is correctly recognized that the image with noise presents "dog".

A model for use in image recognition is a mathematical model also referred to as a recognition model or a learning model, or may be a neural network model. Training conducted by intentionally adding noise to an original image, as described above, is one example of adversarial training.

Owing to the training as described above, a correct recognition result can be obtained even when an image includes noise. A model that is robust against noise can be therefore obtained. However, adding noise to an original image may result in an image completely different from the original image. If training is conducted on the image completely different from the original image using the training label of the original image, image recognition accuracy may be degraded. Thus, performing image recognition that is robust against noise is not necessarily easy.

FIG. 3 is a conceptual diagram illustrating an image with partial noise in the reference example. An image with partial noise, as used herein, is an image obtained by adding noise to the partial area of an original image, not to the entire original image.

Specifically, a masked image, which is obtained by masking an area other than the area to which the noise is added in the entire area of the original image, is generated. In the masked image, 1 is set to each of pixels in the area to which the noise is added, and 0 is set to each of pixels in the remaining area excluding the area to which the noise is added. A noise image composed by noise added to the entire area of the noise image is also generated. The noise image may be composed of, for example, noise evenly added to the entire area of the noise image.

By multiplying each pixel of the masked image by the corresponding pixel of the noise image, a partial noise image including noise only in the area to which the noise is added is generated. An image with partial noise is generated by adding each pixel of the partial noise image to the corresponding pixel of the original image.

Training may be conducted for a model using such an image with partial noise. This makes it possible to conduct training using more patterns, which in turn can yield a model that is more robust against noise.

In an image with partial noise, however, noise is added to the partial area in the image, and no noise is added to the remaining area. An image with partial noise, in which a noise adding method greatly varies from area to area, may not be appropriate for training. Moreover, a label corresponding to an original image may not be appropriate as a label corresponding to an image with partial noise.

The following describes a training method for generating images and labels appropriate for training and conducting training using the images and labels appropriate for training.

FIG. 4 is a block diagram illustrating the configuration of a training device according to the present embodiment. Training device 100 illustrated in FIG. 4 includes processor 101 and memory 102. Training device 100 may be a computer.

Processor 101 is, for example, a dedicated or general electric circuit that performs information processing, and is a circuit that can access memory 102. Processor 101 may be a processor like a central processing unit (CPU). Processor 101 may be an aggregation of electric circuits. Processor 101 may perform information processing by reading and executing a program from memory 102. Processor 101 may perform, as information processing, machine learning or image recognition.

For example, processor 101 generates images for training and labels corresponding to the images. Specifically, processor 101 obtains an original image for training and an original label corresponding to the original image, and from the original image and the original label, generates an additional image for training and an additional label corresponding to the additional image.

Processor 101 trains a model using images for training and labels corresponding to the images. For example, processor 101 conducts training by updating the model so that a label output from the model after an image is inputted to the model matches a label corresponding to the image. Processor 101 may perform image recognition using a trained model.

Memory 102 is, for example, a dedicated or general electric circuit that stores information for processor 101 to perform information processing. Memory 102 may be connected to or included in processor 101. Memory 102 may be an aggregation of electric circuits.

Memory 102 may be a non-volatile or volatile memory. Alternatively, memory 102 may be, for instance, a magnetic disk or an optical disk or may be expressed as, for instance, a storage or a recording medium. Memory 102 may be a non-transitory recording medium such as a CD-ROM.

Memory 102 may store a model for use in image recognition, an image to be recognized, or recognition results. Alternatively, memory 102 may store a program for processor 101 to perform information processing.

FIG. 4 illustrates an example of the configuration of training device 100, but the configuration of training device 100 is not limited to the example illustrated in FIG. 4. Training device 100 may include elements that perform processes to be described below.

FIG. 5 is a flowchart illustrating an operation performed by training device 100 illustrated in FIG. 4. Specifically, in training device 100, processor 101 performs the operation illustrated in FIG. 5 using memory 102.

First, processor 101 generates a first image by adding noise to a first area in an original image (S101). Processor 101 also generates a second image by adding noise to a second area that is an area excluding the first area in the original image (S102). Processor 101 then generates a combined image by weighted addition of the first image and the second image at a first ratio (S103).

Moreover, processor 101 generates a first training label for the first image by weighted addition of a first base label and a second base label at a second ratio (S104). Processor 101 also generates a second training label for the second image by weighted addition of the first base label and the second base label at the inverse ratio of the second ratio (S105). Processor 101 then generates a combined training label for the combined image by weighted addition of the first training label and the second training label at the first ratio (S106).

The first base label corresponds to the correct label of the original image and the second base label corresponds to the incorrect label of the original image. The labels are not limited to labels for presenting a single correct class, and may be so-called soft labels and present likelihoods for a plurality of classes. The second ratio is the ratio between the size of the first area and the size of the second area.

Lastly, processor 101 generates a learning model by machine learning using combined images and combined training labels (S107). Specifically, processor 101 generates a learning model so that when a combined image is input to the learning model, a combined training label is output.

The above-described operation enables training device 100 to add, in accordance with the first ratio, noise to each of a first area in an original image and a second area that is an area excluding the first area in the original image. Training device 100 can therefore inhibit noise from being added using a different method depending on an area. Training device 100 can therefore generate an image appropriate for training.

Training device 100 can combine two training labels using the same ratio as that used for combining two images. Training device 100 can therefore generate a combined training label appropriate for a combined image. Training device 100 can thus generate a learning model that is robust against noise by using combined images and combined training labels.

Training device 100 may include elements respectively corresponding to the processes (S101 through S107) described above. For example, training device 100 may include a first image generator, a second image generator, a combined image generator, a first training label generator, a second training label generator, a combined training label generator, and a learning model generator.

For example, processor 101 may generate a plurality of combined images and a plurality of combined training labels by performing the above-described processes (S101 through S106) for each of a plurality of first areas. Processor 101 may then generate a learning model by machine learning using the plurality of combined images and the plurality of combined training labels. The plurality of first areas are, for example, mutually different areas in an original image. The plurality of first areas may partly overlap each other.

This enables training device 100 to generate various combined images and various combined training labels in accordance with various first areas, which in turn enables training device 100 to generate a learning model that is robust against noise.

For example, processor 101 may generate a plurality of combined images and a plurality of combined training labels by generating a combined image (S103) and generating a combined training label (S106) at each of a plurality of first ratios. Processor 101 may generate a learning model by machine learning using the plurality of combined images and the plurality of combined training labels.

This enables training device 100 to generate various combined images and various combined training labels in accordance with various first ratios, which in turn enables generating a learning model that is robust against noise.

For example, processor 101 may perform the above-described processes (S101 through S106) for each of the plurality of first areas and generate a combined image and a combined training label at each of the plurality of first ratios (S103 and S106). Processor 101 may thus generate a plurality of combined images and a plurality of combined training labels. Processor 101 may then generate a learning model by machine learning using the plurality of combined images and the plurality of combined training labels.

This enables training device 100 to generate various combined images and various combined training labels in accordance with various first areas and various first ratios, which in turn enables training device 100 to generate a learning model that is robust against noise.

FIG. 6 is a conceptual diagram illustrating the details of the generation of a combined image according to the present embodiment. Specifically, processor 101 firstly determines a first area in an original image, and then determines a second area that is an area excluding the first area in the original image. Processor 101 may determine the first area in accordance with the following mathematical expressions.

[Math. 2]

$$r_{x1} \sim U[0, W]$$
$$r_{y1} \sim U[0, H]$$

$$r_{x2} = \min\left(W, W\sqrt{1 - \lambda_1} + r_{x1}\right)$$

$$r_{y2} = \min\left(H, H\sqrt{1 - \lambda_1} + r_{y1}\right)$$

$$\lambda_1 \sim U[0,1]$$

W denotes the width of the original image and H denotes the height of the original image. $r_{x1}$ denotes the left edge of the first area, $r_{y1}$ denotes the upper edge of the first area, $r_{x2}$ denotes the right edge of the first area, and $r_{y2}$ denotes the lower edge of the first area. a~U[b, c] denotes that a is appropriately determined in accordance with an even distribution from b to c. With this, the first area is appropriately determined in accordance with the size of the original image.

Processor 101 then generates a first masked image by masking an area (i.e., the second area), in the original image, that is an area excluding the first area in the entire area of the original image. In the first masked image, 1 is set to each of pixels in the first area and 0 is set to each of pixels in the second area excluding the first area. Processor 101 generates a second masked image by masking an area (i.e., the first area), in the original image, that is an area excluding the second area in the entire area of the original image. In the second masked image, 1 is set to each of pixels in the second area and 0 is set to each of pixels in the first area excluding the second area.

Processor 101 also generates a noise image composed of the same type of noise added to the entire area of the noise image. By multiplying each pixel of the first masked image with the corresponding pixel of the noise image, a first noise image including noise only in the first area is generated. By multiplying each pixel of the second masked image with the corresponding pixel of the noise image, a second noise image including noise only in the second area is generated. The first noise image and the second noise image can be expressed also as a first partial noise image and a second partial noise image, respectively.

Processor 101 then generates a first image by adding each pixel of the first noise image to the corresponding pixel of the original image. The first image is thus generated by adding noise to the first area in the original image. Processor 101 also generates a second image by adding each pixel of the second noise image to the corresponding pixel of the original image. The second image is thus generated by adding noise to the second area that is an area excluding the first area in the original image. The first image and the second image can be expressed also as a first image with partial noise and a second image with partial noise, respectively.

Processor 101 then generates a combined image by performing, at the first ratio, weighted addition of the first image obtained by adding the noise to the first area and the second image obtained by adding the noise to the second area. Specifically, processor 101 generates the combined image by adding the weight of $\lambda_2$ to each pixel of the first image and adding the weight of $1 - \lambda_2$ to each pixel of the second image. $\lambda_2$ is a value from 0 to 1, and may be specifically a value in the range of 0 to 1, inclusive, or a value greater than 0 and less than 1.

Processor 101 may determine $\lambda_2$ in accordance with the beta distribution of $\beta(\alpha, \alpha)$, where $\beta$ denotes a beta function and $\alpha$ denotes a positive real number. This enables generating a combined image and a combined training label using a first ratio corresponding to $\lambda_2$ that is appropriately determined in accordance with a probability distribution having symmetry. When a plurality of datasets are generated from an original image and an original training label, the occurrence of imbalance in the plurality of datasets is inhibited.

Owing to the above-described processes, a combined image is appropriately generated. The above-described processes are one example of processes for generating a combined image and the processes for generating a combined image are not limited to the above-described processes. For example, a masked image, a noise image, and first and second noise images need not be used, and a first image and a second image may be generated by directly adding the same type of noise to each area in an original image.

FIG. 7 is a conceptual diagram illustrating the details of the generation of a combined training label according to the present embodiment. In FIG. 7, $\lambda$ corresponds to a second ratio that is the ratio between the size of a first area and the size of a second area in an original image. Specifically, $\lambda$ denotes the percentage of the size of the first area relative to the size of the original image, and $1 - \lambda$ denotes the percentage of the size of the second area relative to the size of the original image.

The first base label may correspond to the correct label of the original image and may be expressed as a correct label. A correct label is a label indicating the correct class of an object shown in the original image. In other words, the first base label may correspond to a training label for the original image. The first base label may have a likelihood of 100% for the correct class of the object shown in the original image and have a likelihood of 0% for each of the other classes. For example, the first base label may have a likelihood of 100% for the class of dog and have a likelihood of 0% for each of the other classes.

The second base label may correspond to the incorrect label of the original image and may be expressed as an incorrect label. An incorrect label is a label indicating the incorrect class of an object shown in the original image. In other words, the second base label may correspond to a training label for a noise image. The second base label may have a likelihood of 0% for the correct class of the object shown in the original image and have a likelihood greater than 0% for each of the other classes.

For example, the second base label may have a likelihood of 0% for the class of dog and have a likelihood of few percents for each of the other classes. More specifically, the second base label may have, for each of the other classes, a likelihood of 1 / the total number of classes. The total number of classes may be the total number of the other classes.

$y_1$ corresponds to a first training label for the first image. $y_1$ can be obtained by weighted addition of the first base label and the second base label respectively corresponding to a correct label and an incorrect label, in accordance with the ratio between the area with noise and the area without noise in the first image. Specifically, $y_1$ can be obtained by weighted addition of adding the weight of $\lambda$ to the first base label and adding the weight of 1 - $\lambda$ to the second base label, as illustrated in FIG. 7.

$y_2$ corresponds to a second training label for the second image. $y_2$ can be obtained by weighted addition of the first base label and the second base label respectively corresponding to a correct label and an incorrect label, in accordance with the ratio between the area with noise and the area without noise in the second image. Specifically, $y_2$ can be obtained by weighted addition of adding the weight of $\lambda$ to the first base label and adding the weight of 1 - $\lambda$ to the second base label, as illustrated in FIG. 7.

In other words, $y_2$ can be obtained by weighted addition of the first base label and the second base label at the inverse ratio of $y_1$. The inverse ratio means a ratio resulting from replacing a weight provided for the first base label with a weight provided for the second base label.

y corresponds to a combined training label for a combined image. y can be obtained by weighted addition of adding the weight of $\lambda_2$ to a first training label ($y_1$) and adding the weight of 1 - $\lambda_2$ to a second training label ($y_2$). $\lambda_2$ corresponds to a first ratio. In other words, the ratio used for the weighted addition of the first training label and the second training label is same as the ratio used for generating a combined image.

A combined training label is generated through the above-described processes. For example, the percentage of the area with noise is reflected in the generation of the first training label for the first image as well as the generation of the second training label for the second image. The first ratio used for the weighted addition of the first image and the second image is reflected in the weighted addition of the first training label for the first image and the second training label for the second image. A combined training label appropriate for a combined image in which noise is added to each area is therefore generated.

FIG. 8 is a data diagram illustrating the result of comparison with recognition accuracy according to the present embodiment. Specifically, FIG. 8 illustrates, for each type of noise added to an image, the comparison between recognition accuracy based on the training method according to the reference example described with reference to FIG. 3 and recognition accuracy based on the training method according to the present embodiment described with reference to FIG. 4 through FIG. 7.

The types of noise used herein are: no noise; fast gradient sign method (FGSM); project gradient descent (PGD)-10; and PDG-20. Canadian institute for advanced research (CIFAR)-10 dataset is used as a dataset for evaluation.

As compared with the training method according to the reference example, the training method according to the present embodiment inhibits recognition accuracy degradation against various noises. When there is no noise, recognition accuracy achieved by the training method according to the present embodiment is, although slightly lower compared to the training method according to the reference example, at least 90% which is an acceptable level.

Although aspects of a training method according to the present disclosure have been described based on an embodiment, the aspects of the training method are not limited to the embodiment. Modifications conceived by persons skilled in the art may be made to the embodiment or some elements in the embodiment may be discretionarily combined. For example, a process performed by a specific element in the embodiment may be performed by a different element instead of the specific element. Moreover, an order of processes may be changed or processes may be performed in parallel.

The ordinal numbers, such as the first and the second, used in the foregoing description may be changed, removed, or provided anew where necessary. These ordinal numbers do not necessarily correspond to an order that has a meaning, and may be used for element identification.

The training method may be implemented by any device or system. In other words, the training method may be implemented by a training device or any other device or system.

For example, the training method may be implemented by a computer including, for instance, a processor, memory, and an input/output circuit. In this case, the training method may be implemented by the computer executing a program for causing the computer to execute the training method. The program may be recorded on a non-transitory computer-readable recording medium such as a CD-ROM.

The above-described program causes the computer to execute a training method for generating a learning model for use in image recognition, and includes: generating a first image by adding noise to a first area in an original image; generating a second image by adding noise to a second area that is an area excluding the first area in the original image; generating a combined image by weighted addition of the first image and the second image at a first ratio; generating a first training label for the first image by weighted addition of a first base label corresponding to the correct label of the original image and a second base label corresponding to the incorrect label of the original image at a second ratio that is the ratio between the size of the first area and the size of the second area; generating a second training label for the second image by weighted addition of the first base label and the second base label at the inverse ratio of the second ratio; generating a combined training label for the combined image by weighted addition of the first training label and the second training label at the first ratio; and generating the learning model by machine learning using the combined image and the combined training label.

A plurality of elements in a training device that executes the training method may be configured of dedicated hardware, general hardware that executes the above-described program, or a combination thereof. The general hardware may be configured by, for instance, memory storing a program and a general processor that reads and executes the program from the memory. The memory may be, for instance, a semiconductor memory or a hard disk, and the general processor may be, for instance, a central processing unit (CPU).

The dedicated hardware may be configured by, for instance, memory and a dedicated processor. For example, the dedicated processor may execute the above-described training method with reference to the memory.

Each of elements in a training device that executes the training method may be an electric circuit. These electric circuits may compose a single electric circuit as a whole or may be separate circuits. These electric circuits may be adapted to dedicated hardware or general hardware that executes, for instance, the above-described program.

The present disclosure may be implemented as a training data (a so-called dataset) generation method for generating a learning model by machine learning. The training data generation method is for generating a learning model for use in image recognition by machine learning and includes: generating a first image by adding noise to a first area in an original image; generating a second image by adding noise to a second area that is an area excluding the first area in the original image; generating a combined image by weighted addition of the first image and the second image at a first ratio; generating a first training label for the first image by weighted addition of a first base label corresponding to the correct label of the original image and a second base label corresponding to the incorrect label of the original image at a second ratio that is the ratio between the size of the first area and the size of the second area; generating a second training label for the second image by weighted addition of the first base label and the second base label at the inverse ratio of the second ratio; generating a combined training label for the combined image by weighted addition of the first training label and the second training label at the first ratio; and generating the learning model by machine learning using the combined image and the combined training label.

The combined image may include, in addition to a first area and a second area, a third area with noise different from that of the first area or the second area. A combined training label may be generated based on the size of the first area, the size of the second area, and the size of the third area.

A first area in a combined image is a rectangular area, but may be a non-rectangular area.

[Industrial Applicability]

The present disclosure is useful for training devices that generate learning models for use in image recognition, and is applicable to, for instance, image recognition systems, character recognition systems, and biometric authentication systems.

[Reference Signs List]

100    training device
101    processor
102    memory

**Claims**

**1.** A computer-implemented training method for generating a learning model for use in image recognition, the training method comprising:

generating a first image by adding noise to a first area in an original image (S101);
generating a second image by adding noise to a second area that is an area excluding the first area in the original image (S102);
generating a combined image by weighted addition of the first image and the second image at a first ratio (S103);
generating a first training label for the first image (S104) by weighted addition of a first base label corresponding to a correct label of the original image and a second base label corresponding to an incorrect label of the original image at a second ratio that is a ratio between a size of the first area and a size of the second area;
generating a second training label for the second image (S105) by weighted addition of the first base label and the second base label at an inverse ratio of the second ratio;
generating a combined training label for the combined image by weighted addition of the first training label and the second training label at the first ratio (S106); and
generating the learning model by machine learning using the combined image and the combined training label (S107).

2. The computer-implemented training method according to claim 1, wherein

a plurality of combined images and a plurality of combined training labels are generated by generating, for each of a plurality of first areas, the first image, the second image, the combined image, the first training label, the second training label, and the combined training label, each of the plurality of combined images being the combined image, each of the plurality of combined training labels being the combined training label, each of the plurality of first areas being the first area, and
the learning model is generated by machine learning using the plurality of combined images and the plurality of combined training labels.

3. The computer-implemented training method according to claim 1 or 2, wherein

a plurality of combined images and a plurality of combined training labels are generated by generating the combined image and the combined training label at each of a plurality of first ratios, each of the plurality of combined images being the combined image, each of the plurality of combined training labels being the combined training label, each of the plurality of first ratios being the first ratio, and
the learning model is generated by machine learning using the plurality of combined images and the plurality of combined training labels.

4. The computer-implemented training method according to claim 1 or 2, wherein

the first area is determined in accordance with the following mathematical expressions:

[Math. 1]

$$r_{x1} \sim U[0, W]$$
$$r_{y1} \sim U[0, H]$$

$$r_{x2} = \min\left(W, W\sqrt{1 - \lambda_1} + r_{x1}\right)$$

$$r_{y2} = \min\left(H, H\sqrt{1 - \lambda_1} + r_{y1}\right)$$

$$\lambda_1 \sim U[0,1]$$

where W denotes a width of the original image, H denotes a height of the original image, $r_{x1}$ denotes a left edge of the first area, $r_{y1}$ denotes an upper edge of the first area, $r_{x2}$ denotes a right edge of the first area, $r_{y2}$ denotes a lower edge of the first area, and a~U[b, c] denotes that a is determined in accordance with an even distribution from b to c.

5. The computer-implemented training method according to claim 1 or 2, wherein
the first ratio is determined in accordance with a beta distribution of $\beta(\alpha, \alpha)$, where $\beta$ denotes a beta function, and $\alpha$

denotes a positive real number.

6. A training device (100) that generates a learning model for use in image recognition, the training device (100) comprising:

a processor (101); and
memory (102), wherein
using the memory (102), the processor (101):

generates a first image by adding noise to a first area in an original image;
generates a second image by adding noise to a second area that is an area excluding the first area in the original image;
generates a combined image by weighted addition of the first image and the second image at a first ratio;
generates a first training label for the first image by weighted addition of a first base label corresponding to a correct label of the original image and a second base label corresponding to an incorrect label of the original image at a second ratio that is a ratio between a size of the first area and a size of the second area;
generates a second training label for the second image by weighted addition of the first base label and the second base label at an inverse ratio of the second ratio;
generates a combined training label for the combined image by weighted addition of the first training label and the second training label at the first ratio; and
generates the learning model by machine learning using the combined image and the combined training label.

7. A program for causing a computer to execute the training method according to claim 1 or 2.

**Patentansprüche**

1. Computerimplementiertes Trainingsverfahren zum Erzeugen eines Lernmodells zur Verwendung in der Bilderkennung, wobei das Trainingsverfahren umfasst:

Erzeugen eines ersten Bildes durch Hinzufügen von Rauschen zu einem ersten Bereich in einem Originalbild (S101);
Erzeugen eines zweiten Bildes durch Hinzufügen von Rauschen zu einem zweiten Bereich, der ein Bereich ist, der den ersten Bereich im Originalbild ausschließt (S102);
Erzeugen eines kombinierten Bildes durch gewichtete Addition des ersten Bildes und des zweiten Bildes in einem ersten Verhältnis (S103);
Erzeugen einer ersten Trainingsbezeichnung für das erste Bild (S104) durch gewichtete Addition einer ersten Basisbezeichnung, die einer korrekten Bezeichnung des Originalbildes entspricht, und einer zweiten Basisbezeichnung, die einer inkorrekten Bezeichnung des Originalbildes entspricht, in einem zweiten Verhältnis, das ein Verhältnis zwischen einer Größe des ersten Bereichs und einer Größe des zweiten Bereichs ist;
Erzeugen einer zweiten Trainingsbezeichnung für das zweite Bild (S105) durch gewichtete Addition der ersten Basisbezeichnung und der zweiten Basisbezeichnung in einem inversen Verhältnis des zweiten Verhältnisses;
Erzeugen einer kombinierten Trainingsbezeichnung für das kombinierte Bild durch gewichtete Addition der ersten Trainingsbezeichnung und der zweiten Trainingsbezeichnung in dem ersten Verhältnis (S106); und
Erzeugen des Lernmodells durch maschinelles Lernen unter Verwendung des kombinierten Bildes und der kombinierten Trainingsbezeichnung (S107).

2. Computerimplementiertes Trainingsverfahren nach Anspruch 1, wobei

eine Mehrzahl von kombinierten Bildern und eine Mehrzahl von kombinierten Trainingsbezeichnungen erzeugt werden, indem für jeden einer Mehrzahl von ersten Bereichen das erste Bild, das zweite Bild, das kombinierte Bild, die erste Trainingsbezeichnung, die zweite Trainingsbezeichnung und die kombinierte Trainingsbezeichnung erzeugt werden, wobei jedes der Mehrzahl von kombinierten Bildern das kombinierte Bild ist, jede der Mehrzahl von kombinierten Trainingsbezeichnungen die kombinierte Trainingsbezeichnung ist, jeder der Mehrzahl von ersten Bereichen der erste Bereich ist, und
das Lernmodell durch maschinelles Lernen unter Verwendung der Mehrzahl von kombinierten Bildern und der Mehrzahl von kombinierten Trainingsbezeichnungen erzeugt wird.

3. Computerimplementiertes Trainingsverfahren nach Anspruch 1 oder 2, wobei

eine Mehrzahl von kombinierten Bildern und eine Mehrzahl von kombinierten Trainingsbezeichnungen erzeugt werden, indem das kombinierte Bild und die kombinierte Trainingsbezeichnung in jedem einer Mehrzahl von ersten Verhältnissen erzeugt werden, wobei jedes der Mehrzahl von kombinierten Bildern das kombinierte Bild ist, jede der Mehrzahl von kombinierten Trainingsbezeichnungen die kombinierte Trainingsbezeichnung ist, jedes der Mehrzahl von ersten Verhältnissen das erste Verhältnis ist, und
das Lernmodell durch maschinelles Lernen unter Verwendung der Mehrzahl von kombinierten Bildern und der Mehrzahl von kombinierten Trainingsbezeichnungen erzeugt wird.

4. Computerimplementiertes Trainingsverfahren nach Anspruch 1 oder 2, wobei

der erste Bereich gemäß den folgenden mathematischen Ausdrücken bestimmt wird:

[Math. 1]

$$r_{x1} \sim U[0, W]$$

$$r_{y1} \sim U[0, H]$$

$$r_{x2} = \min(W, W\sqrt{(1 - \lambda_1)} + r_{x1})$$

$$r_{y2} = \min(H, H\sqrt{(1 - \lambda_1)} + r_{y1})$$

$$\lambda_1 \sim U[0,1]$$

wobei W eine Breite des Originalbildes bezeichnet, H eine Höhe des Originalbildes bezeichnet, $r_{x1}$ einen linken Rand des ersten Bereichs bezeichnet, $r_{y1}$ einen oberen Rand des ersten Bereichs bezeichnet, $r_{x2}$ einen rechten Rand des ersten Bereichs bezeichnet, $r_{y2}$ einen unteren Rand des ersten Bereichs bezeichnet, und a~U[b, c] bezeichnet, dass a gemäß einer Gleichverteilung von b bis c bestimmt wird.

5. Computerimplementiertes Trainingsverfahren nach Anspruch 1 oder 2, wobei
das erste Verhältnis gemäß einer Beta-Verteilung von $\beta(\alpha, \alpha)$ bestimmt wird, wobei $\beta$ eine Beta-Funktion bezeichnet und $\alpha$ eine positive reelle Zahl bezeichnet.

6. Trainingsvorrichtung (100), die ein Lernmodell zur Verwendung in der Bilderkennung erzeugt, wobei die Trainingsvorrichtung (100) umfasst:

einen Prozessor (101); und
einen Speicher (102), wobei
der Prozessor (101) unter Verwendung des Speichers (102):

ein erstes Bild durch Hinzufügen von Rauschen zu einem ersten Bereich in einem Originalbild erzeugt;
ein zweites Bild durch Hinzufügen von Rauschen zu einem zweiten Bereich, der ein Bereich ist, der den ersten Bereich im Originalbild ausschließt, erzeugt;
ein kombiniertes Bild durch gewichtete Addition des ersten Bildes und des zweiten Bildes in einem ersten Verhältnis erzeugt;
eine erste Trainingsbezeichnung für das erste Bild durch gewichtete Addition einer ersten Basisbezeichnung, die einer korrekten Bezeichnung des Originalbildes entspricht, und einer zweiten Basisbezeichnung, die einer inkorrekten Bezeichnung des Originalbildes entspricht, in einem zweiten Verhältnis, das ein Verhältnis zwischen einer Größe des ersten Bereichs und einer Größe des zweiten Bereichs ist, erzeugt;
eine zweite Trainingsbezeichnung für das zweite Bild durch gewichtete Addition der ersten Basisbezeichnung und der zweiten Basisbezeichnung in einem inversen Verhältnis des zweiten Verhältnisses erzeugt;
eine kombinierte Trainingsbezeichnung für das kombinierte Bild durch gewichtete Addition der ersten Trainingsbezeichnung und der zweiten Trainingsbezeichnung in dem ersten Verhältnis erzeugt; und
das Lernmodell durch maschinelles Lernen unter Verwendung des kombinierten Bildes und der kombinierten Trainingsbezeichnung erzeugt.

EP 4 350 612 B1

7. Programm, um einen Computer dazu zu veranlassen, das Trainingsverfahren nach Anspruch 1 oder 2 auszuführen.

**Revendications**

1. Procédé d'entraînement mis en œuvre par ordinateur pour générer un modèle d'apprentissage destiné à être utilisé dans la reconnaissance d'images, le procédé d'entraînement comprenant :

générer une première image en ajoutant du bruit à une première zone dans une image originale (S101) ;
générer une deuxième image en ajoutant du bruit à une deuxième zone qui est une zone excluant la première zone dans l'image originale (S102) ;
générer une image combinée par addition pondérée de la première image et de la deuxième image selon un premier rapport (S103) ;
générer une première étiquette d'entraînement pour la première image (S104) par addition pondérée d'une première étiquette de base correspondant à une étiquette correcte de l'image originale et d'une deuxième étiquette de base correspondant à une étiquette incorrecte de l'image originale selon un deuxième rapport qui est un rapport entre une taille de la première zone et une taille de la deuxième zone ;
générer une deuxième étiquette d'entraînement pour la deuxième image (S105) par addition pondérée de la première étiquette de base et de la deuxième étiquette de base selon un rapport inverse du deuxième rapport ;
générer une étiquette d'entraînement combinée pour l'image combinée par addition pondérée de la première étiquette d'entraînement et de la deuxième étiquette d'entraînement selon le premier rapport (S106) ; et
générer le modèle d'apprentissage par apprentissage automatique en utilisant l'image combinée et l'étiquette d'entraînement combinée (S107).

2. Procédé d'entraînement mis en œuvre par ordinateur selon la revendication 1, dans lequel

une pluralité d'images combinées et une pluralité d'étiquettes d'entraînement combinées sont générées en générant, pour chacune d'une pluralité de premières zones, la première image, la deuxième image, l'image combinée, la première étiquette d'entraînement, la deuxième étiquette d'entraînement et l'étiquette d'entraînement combinée, chacune de la pluralité d'images combinées étant l'image combinée, chacune de la pluralité d'étiquettes d'entraînement combinées étant l'étiquette d'entraînement combinée, chacune de la pluralité de premières zones étant la première zone, et
le modèle d'apprentissage est généré par apprentissage automatique en utilisant la pluralité d'images combinées et la pluralité d'étiquettes d'entraînement combinées.

3. Procédé d'entraînement mis en œuvre par ordinateur selon la revendication 1 ou 2, dans lequel

une pluralité d'images combinées et une pluralité d'étiquettes d'entraînement combinées sont générées en générant l'image combinée et l'étiquette d'entraînement combinée à chacun d'une pluralité de premiers rapports, chacune de la pluralité d'images combinées étant l'image combinée, chacune de la pluralité d'étiquettes d'entraînement combinées étant l'étiquette d'entraînement combinée, chacun de la pluralité de premiers rapports étant le premier rapport, et
le modèle d'apprentissage est généré par apprentissage automatique en utilisant la pluralité d'images combinées et la pluralité d'étiquettes d'entraînement combinées.

4. Procédé d'entraînement mis en œuvre par ordinateur selon la revendication 1 ou 2, dans lequel

la première zone est déterminée conformément aux expressions mathématiques suivantes :

13

[Math. 1]

$$r_{x1} \sim U[0, W]$$

$$r_{y1} \sim U[0, H]$$

$$r_{x2} = \min(W, W\sqrt{(1 - \lambda_1)} + r_{x1})$$

$$r_{y2} = \min(H, H\sqrt{(1 - \lambda_1)} + r_{y1})$$

$$\lambda_1 \sim U[0,1]$$

où W désigne une largeur de l'image originale, H désigne une hauteur de l'image originale, $r_{x1}$ désigne un bord gauche de la première zone, $r_{y1}$ désigne un bord supérieur de la première zone, $r_{x2}$ désigne un bord droit de la première zone, $r_{y2}$ désigne un bord inférieur de la première zone, et $a \sim U[b, c]$ désigne que a est déterminé conformément à une distribution uniforme de b à c.

5. Procédé d'entraînement mis en œuvre par ordinateur selon la revendication 1 ou 2, dans lequel le premier rapport est déterminé conformément à une distribution bêta de $\beta(\alpha, \alpha)$, où $\beta$ désigne une fonction bêta, et $\alpha$ désigne un nombre réel positif.

6. Dispositif d'entraînement (100) qui génère un modèle d'apprentissage destiné à être utilisé dans la reconnaissance d'images, le dispositif d'entraînement (100) comprenant :

un processeur (101) ; et
une mémoire (102), dans lequel
en utilisant la mémoire (102), le processeur (101) :

génère une première image en ajoutant du bruit à une première zone dans une image originale ;
génère une deuxième image en ajoutant du bruit à une deuxième zone qui est une zone excluant la première zone dans l'image originale ;
génère une image combinée par addition pondérée de la première image et de la deuxième image selon un premier rapport ;
génère une première étiquette d'entraînement pour la première image par addition pondérée d'une première étiquette de base correspondant à une étiquette correcte de l'image originale et d'une deuxième étiquette de base correspondant à une étiquette incorrecte de l'image originale selon un deuxième rapport qui est un rapport entre une taille de la première zone et une taille de la deuxième zone ;
génère une deuxième étiquette d'entraînement pour la deuxième image par addition pondérée de la première étiquette de base et de la deuxième étiquette de base selon un rapport inverse du deuxième rapport ;
génère une étiquette d'entraînement combinée pour l'image combinée par addition pondérée de la première étiquette d'entraînement et de la deuxième étiquette d'entraînement selon le premier rapport ; et
génère le modèle d'apprentissage par apprentissage automatique en utilisant l'image combinée et l'étiquette d'entraînement combinée.

7. Programme pour amener un ordinateur à exécuter le procédé d'entraînement selon la revendication 1 ou 2.

# FIG. 1

Original image     Noise image     Image with noise

Recognition processing     Recognition processing

Recognize image as "dog"     Recognize image as "cat"

# FIG. 2

Model

Image with noise    Input    Output    "Dog"

Update model so that image is recognized as "dog"

FIG. 3

# FIG. 4

100

Training device

101

102

Processor ←→ Memory

# FIG. 5

```
        ┌─────────────┐
        │    Start    │
        └──────┬──────┘
               │           ╱S101
               ▼
┌──────────────────────────────────┐
│   Generate first image by adding  │
│         noise to first area       │
└──────────────┬───────────────────┘
               │           ╱S102
               ▼
┌──────────────────────────────────┐
│    Generate second image by       │
│     adding noise to second area   │
└──────────────┬───────────────────┘
               │           ╱S103
               ▼
┌──────────────────────────────────┐
│     Generate combined image by    │
│   weighted addition of first image│
│        and second image           │
└──────────────┬───────────────────┘
               │           ╱S104
               ▼
┌──────────────────────────────────┐
│    Generate first training label  │
│           for first image         │
└──────────────┬───────────────────┘
               │           ╱S105
               ▼
┌──────────────────────────────────┐
│    Generate second training label │
│          for second image         │
└──────────────┬───────────────────┘
               │           ╱S106
               ▼
┌──────────────────────────────────┐
│  Generate combined training label │
│  by weighted addition of first    │
│  training label and second        │
│  training label                   │
└──────────────┬───────────────────┘
               │           ╱S107
               ▼
┌──────────────────────────────────┐
│  Generate learning model by       │
│  machine learning using combined  │
│  image and combined training label│
└──────────────┬───────────────────┘
               │
               ▼
        ┌─────────────┐
        │     End     │
        └─────────────┘
```

# FIG. 6

## FIG. 7

$$y_1 = \lambda \times \left( \text{First base label} \right) + (1-\lambda) \times \left( \text{Second base label} \right)$$

$$y_2 = \lambda \times \left( \text{Second base label} \right) + (1-\lambda) \times \left( \text{First base label} \right)$$

$$y = \lambda_2 y_1 + (1-\lambda_2)y_2$$

# FIG. 8

| Types of noise to be added to image | No noise | FGSM | PGD-10 | PGD-20 |
|---|---|---|---|---|
| Recognition accuracy based on reference example [%] | 93.36 | 65.80 | 50.48 | 42.46 |
| Recognition accuracy based on embodiment [%] | 92.31 | 79.39 | 74.28 | 71.63 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019079374 A

- US 2016026900 A